# EUROPÄISCHE PATENTANMELDUNG

(11) **EP 1 022 262 A1**
(43) Veröffentlichungstag der Anmeldung: **26.07.2000**
(21) Anmeldenummer: 00890009.4
(22) Anmeldetag: 13.01.2000
(51) Int. Cl.: C04B 7/52, B02C 19/06

(54) **Verfahren zum Zerkleinern von Klinker sowie Vorrichtung zur Durchführung dieses Verfahrens**

(30) Priorität: 20.01.1999 AT 7599
(71) Anmelder: HOLDERBANK FINANCIERE GLARUS AG, CH-8750 Glarus (CH)
(72) Erfinder: Edlinger, Alfred, Dipl. Ing., 5400 Baden (CH)
(74) Vertreter: Haffner, Thomas M., Dr.

(57) **Zusammenfassung**

Bei einem Verfahren zum Zerkleinern von Klinker aus einer einem Klinkerofen nachgeschalteten Klinkerkühlanlage wird der Klinker im Anschluß an den Klinkerofen auf Temperaturen von 500 bis 900° C mit Luft gekühlt und verfestigt, wobei die Kühlluft bei Temperaturen von über 800° C dem Klinkerofen als Verbrennungsluft rückgeführt wird. Die heißen Klinkerteilchen werden mit Hochdruckwasser unter einem Druck von über 10 bar beaufschlagt und beschleunigt und in der Folge gegen eine Prallplatte oder weitere Klinkerteilchen gerichtet gefördert, wobei überhitzter Dampf bei atmosphärischem Druck und Temperaturen über 110° C, vorzugsweise 110 bis 150° C, abgezogen wird. Bei der Vorrichtung zur Durchführung des Verfahrens ist an den Klinkerkühler (2) eine Druckschleuse (8) angeschlossen ist, über welche heißer Klinker in ein Rohr (9) eingebracht wird, wobei an das Rohr (9) an einem Ende eine Druckwasserleitung angeschlossen und am anderen Ende des Rohres (9) eine Austrittsöffnung für den Klinker und den gebildeten überhitzten Wasserdampf angeordnet ist.

## Beschreibung

Die Erfindung bezieht sich auf ein Verfahren zum Zerkleinern von Klinker aus einer einem Klinkerofen nachgeschalteten Klinkerkühlanlage sowie auf eine Vorrichtung zur Durchführung dieses Verfahrens mit einem Klinkerofen und einem Klinkerkühler.

Bei der Herstellung von Zement wird üblicherweise in einem Drehrohrofen bzw. Klinkerofen ein Klinker gebrannt, welcher in einer nachgeschalteten Kühlanlage erstarrt und abgekühlt wird. Übliche Klinkerkühlanlagen weisen eine relativ große Bauform auf und werden mit Kühlluft betrieben, wobei die Kühlluft nach dem Verlassen des Klinkerkühlers mit Temperaturen von 500 bis 700° C anfällt. Derartige Kühlluft, welche in hohen Mengen anfällt, wird teilweise als Verbrennungsluft dem Klinkerbrennofen aufgegeben, wobei die Restmenge an der Kühlluft in der Folge thermisch genutzt werden kann. Der abgekühlte Klinker wird in der Folge in Mahleinrichtungen zerkleinert, wobei für die Zerkleinerung neben mechanischen Mühlen auch Strahlmühlen zum Einsatz gelangen.

Für die Zerkleinerung von Schmelzen und insbesondere von flüssiger Hochofenschlacke bzw. Klinker wurde bereits vorgeschlagen, derartige schmelzflüssige Ausgangsmaterialien mit Wasser zu granulieren, um ein amorphes Produkt zu erhalten, welches in der Glasphase, d.h. einer metastabilen Phase, erstarrt. Das Granulieren von schmelzflüssigem Klinker mit Wasser setzt allerdings eine exakte Verfahrensführung voraus, um zu verhindern, daß die hydraulischen Eigenschaften des gewünschten Endproduktes verschlechtert werden. Die bekannten Abkühlverfahren nützen die Schlackenschmelzwärme thermodynamisch und technisch nur zu einem überaus geringen Bruchteil, wobei die ursprünglich in den Schmelzen enthaltene Energie weitestgehend in Form der metastabilen Glasphase des Endproduktes gespeichert wird, um eine Umwandlung in einen stabilen kristallinen Zustand zu verhindern.

In der WO 95/15402 wurde bereits ein Verfahren zum Granulieren und Zerkleinern von schmelzflüssigem Material und Mahlgut vorgeschlagen, bei welchem die Schmelze in eine Mischkammer unter Druck eingebracht wurde und in die Mischkammer Druckwasser, Dampf oder Wasser/Dampfgemische eingedüst werden. Durch die rasche Expansion wird hiebei in der Mischkammer ein Druck aufgebaut, der über einen Diffusor zum Ausstoß der erstarrten aber noch teilweise plastischen Partikel herangezogen wird, wobei die kinetische Energie der Teilchen zur Zerkleinerung genützt wurde. Bei einem derartigen Verfahren fallen hohe Dampfmengen an und die Verwendung von flüssigen Schmelzen stellt hohe Anforderung an die Verschleißbeständigkeit der für die Vorrichtungen eingesetzten Materialien.

Das Eindüsen von Druckwasser in Schmelzen führt unter anderem auch zu expandierter bzw. geblähter Schlacke und ein Verfahren zur Herstellung derartiger expandierter bzw. geblähter Schlacke ist beispielsweise in der US-A 2 450 978 beschrieben. Die Ausbildung derartig expandierter Partikel ist aber nun bei der Herstellung von gemahlenem Klinker nicht erwünscht, wobei bei den bekannten Einrichtungen zu allem Überfluß das gemeinsam mit dem gebildeten Wasserdampf ausgestossene Material an Prallplatten in erster Linie agglomeriert wurde und somit größere Partikel gebildet werden, wodurch eine wirkungsvolle Zerkleinerung verhindert wird.

Die Erfindung zielt nun darauf ab, eine Einrichtung der eingangs genannten Art dahingehend weiterzubilden, daß die thermische Effizienz wesentlich verbessert wird und mit kleiner bauenden Einrichtungen die gewünschte Kühlung und Zerkleinerung sicher erreicht wird. Zur Lösung dieser Aufgabe besteht das erfindungsgemäße Verfahren im wesentlichen darin, daß der Klinker im Anschluß an den Klinkerofen auf Temperaturen von 500 bis 900° C mit Luft gekühlt und verfestigt wird, daß die Kühlluft bei Temperaturen von über 800° C dem Klinkerofen als Verbrennungsluft rückgeführt wird, daß die heißen Klinkerteilchen mit Hochdruckwasser unter einem Druck von über 10 bar beaufschlagt und beschleunigt werden und in der Folge gegen eine Prallplatte oder weitere Klinkerteilchen gerichtet gefördert werden und daß überhitzter Dampf bei atmosphärischem Druck und Temperaturen über 110° C, vorzugsweise 110 bis 150° C, abgezogen wird. Dadurch, daß Klinker im Anschluß an den Klinkerofen auf Temperaturen von 500 bis 900° C mit Luft gekühlt wird, wird es möglich wesentlich kleiner bauende Klinkerkühlanlagen zu verwenden und die Kühlluftmenge, welche für die Abkühlung auf derartig höhere Temperaturen erforderlich ist, wesentlich zu reduzieren. Insbesondere gelingt es durch die Anhebung des Temperaturniveaus des ausgetragenen Klinkers auf Temperaturen bis 900° C das Verfahren so zu steuern, wie es einer bevorzugten Durchführung des erfindungsgemäßen Verfahrens entspricht, daß die Kühlluftmenge für den Klinkerkühler der im Klinkerofen benötigten Verbrennungsluftmenge entsprechend gewählt wird. Es entstehen somit keine Übermengen an Kühlluft mit vergleichsweise geringerem Temperaturniveau und es muß derartige Verbrennungsluft nicht wiederum zusätzlich in den Brennern des Klinkerofens aufgeheizt werden. Vielmehr fällt die Kühlluft mit entsprechend höherem Temperaturniveau und insbesondere bei Temperaturen von 1000° bis 1200° C an, sodaß die Verbrennung im vorgeschalteten Klinkerofen besonders effizient gestaltet werden kann. Durch die Verringerung der Kühlluftmenge kann auf eine gesonderte Verwertung von Übermengen an Kühlluft verzichtet werden, da die gesamte Kühlluft als Verbrennungsluft dem Klinkerofen rückgeführt werden kann. Dadurch, daß nun Klinkerteilchen mit Temperaturen von 500° C bereits verfestigt ausgetragen werden, kann eine wirkungsvolle Desintegration in einer konstruktiv besonders einfachen Einrichtung, nämlich einem einfachen Rohr, vorgenommen werden. Erfindungsgemäß wird nun so vorgegangen, daß die heißen Klinkerteilchen mit Hochdruckwasser unter einem Druck von über 10 bar beaufschlagt werden, wobei der Hochdruckwasserstrahl in die heißen Klinkerteilchen eindringt und explosionsartig verdampft, was zur wirkungsvollen Desintegration der Klinkerpartikel führt, da diese selbst noch auf vergleichsweise hohem Temperaturniveau sind. Aufgrund des höheren Temperaturniveaus ist die Neigung zur Desintegration wesentlich höher als bei weitestgehend abgekühltem Klinker, sodaß mit vergleichsweise geringen Druckwassermengen eine rasche Desintegration bewirkt wird. Gleichzeitig mit der explosionsartigen Verdampfung des Hochdruckwasserstrahles wird den Partikeln nun auch ein hohes Maß an kinetischer Energie mitgegeben und diese Teilchen werden somit beschleunigt und können in der Folge gegen eine Prallplatte oder weitere Klinkerteilchen gerichtet gefördert werden. Bei der Durchführung des erfindungsgemäßen Verfahrens muß lediglich dafür gesorgt werden, daß überhitzter Dampf bei atmosphärischem Druck und damit bei Temperaturen von über 110° C, vorzugsweise von 110 bis 150° C, abgezogen wird, um eine partielle Hydratisierung und damit eine Verschlechterung der hydraulischen Eigenschaften der zerkleinerten Teilchen zu vermeiden.

Mit Vorteil wird im Rahmen des erfindungsgemäßen Verfahrens Hochdruckwasser mit einem Druck zwischen 10 und 200 bar eingesetzt, wobei eine wirkungsvolle Desintegration in besonders einfacher Weise dadurch erzielt werden kann, daß ein aus zerkleinertem Klinker und überhitztem Wasserdampf gebildeter Strahl in eine Wirbelschicht mit heißem Klinker gerichtet wird. Eine derartige Wirbelschicht aus heißem Klinker kann beispielsweise in einem Wirbelschichtreaktor ausgebildet sein, welcher in der Folge nach Art einer Strahlmühle zum Einsatz gelangt. Da die heißen Klinkerpartikel bei der Beaufschlagung mit Hochdruckwasser bereits verfestigt vorliegen und in der Folge durch den explosionsartig verdampfenden Hochdruckwasserstrahl wirkungsvoll gekühlt werden, ist beim Auftreffen auf eine Prallplatte eine Agglomeration und damit die Ausbildung größerer Partikel weitestgehend ausgeschlossen.

Die erfindungsgemäße Vorrichtung zur Durchführung dieses Verfahrens setzt einen Klinkerofen und einen Klinkerkühler voraus und ist im wesentlichen dadurch gekennzeichnet, daß an den Klinkerkühler eine Druckschleuse angeschlossen ist, über welche heißer Klinker in ein Rohr eingebracht wird, daß an das Rohr an einem Ende eine Druckwasserleitung angeschlossen ist und daß am anderen Ende des Rohres eine Austrittsöffnung für den Klinker und den gebildeten überhitzten Wasserdampf angeordnet ist. Konstruktiv kann somit ein einfaches hoch belastbares Rohr zum Einsatz gelangen, welches an einer Seite abgeschlossen ist, wobei an diese Seite eine Druckwasserleitung mit einer Hochdruckdüse angeschlossen ist. Mit Mengen von etwa 0,1 kg Hochdruckwasser pro kg Klinker fällt hiebei überhitzter Dampf mit etwa 150° C bei Umgebungsdruck an der Mündung des Rohres an, wobei unmittelbar bereits Klinkerfeinheiten von etwa 2000 Blaine aufgrund des Energieinhaltes des heißen Klinkers erzielt werden können. Die innere Klinkerenergie wird somit in hohem Maße für die Zerkleinerung genützt und es muß lediglich dafür Sorge getragen werden, daß der überhitzte Wasserdampf entsprechend abgesaugt wird um eine Kondensation bei der weiteren Abkühlung des Klinkers zu verhindern.

Die Zerkleinerungsleistung eines derartigen einfachen Rohres kann dadurch noch weiter erhöht werden, daß im Inneren des Rohres radial einwärts gerichtete Vorsprünge angeordnet sind, wobei vorzugsweise die radial einwärts gerichteten Vorsprünge sich über einen Teil des Innenumfangs des Rohres erstrecken und in Achsrichtung des Rohres versetzt und auf Lücke angeordnet sind. Eine derartige Mehrzahl von einwärts gerichteten Vorsprüngen bzw. Prallplatten hat darüberhinaus zur Folge, daß auch die Geräuschentwicklung wesentlich reduziert werden kann. Für die weitere Zerkleinerung kann am Austritt des Rohres eine Prallplatte angeordnet werden. Besonders bevorzugt ist die Ausbildung aber so getroffen, daß das Austrittsende des Rohres an einen Wirbelschichtreaktor angeschlossen ist, an welchem eine Aufgabe für heißen Klinker angeschlossen ist.

Um in einem derartigen Wirbelschichtreaktor, welcher nach Art einer Strahlmühle wirkt, den Verschleiß entsprechend zu reduzieren, ist mit Vorteil die Ausbildung so getroffen, daß der Wirbelschichtreaktor eine Auspanzerung trägt, welche von der Achse des angeschlossenen Rohres durchsetzt wird.

Der Austrag des zerkleinerten Materiales aus dem Wirbelschichtreaktor bzw. der Strahlmühle kann in der Folge in besonders einfacher Weise dadurch gewährleistet werden, daß an den Wirbelschichtreaktor ein Sichter zum Austrag des zerkleinerten Klinkers angeschlossen ist.

Um nun in einer derartigen Wirbelschicht die Gefahr einer Kondensation des überhitzten Wasserdampfes durch weitere Abkühlung mit Sicherheit zu vermeiden, kann dieser Wirbelschicht in entsprechend kontrollierter Weise heißer Klinker aufgegeben werden. Mit Vorteil ist die Ausbildung hiefür so getroffen, daß eine Dosiereinrichtung für die Zugabe von heißem Klinker in den Wirbelschichtreaktor vorgesehen ist.

Eine vollständige Nutzung der fühlbaren Wärme der Abluft des Klinkerkühlers kann in einfacher Weise dadurch erzielt werden, daß der Klinkerkühler über eine Abluftleitung mit Brennern des Klinkerofens verbunden ist.

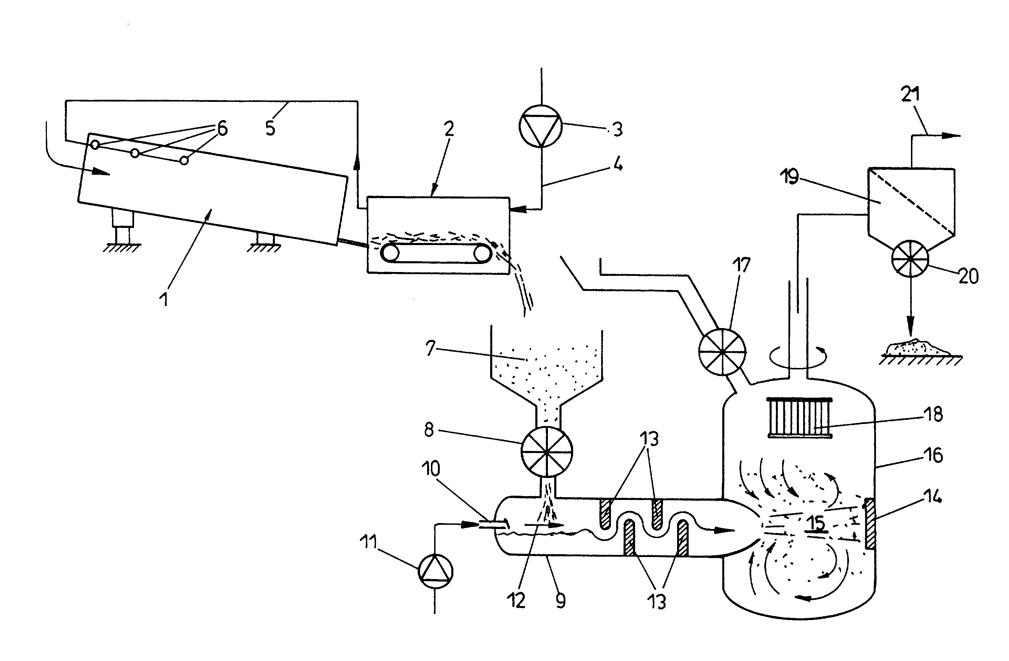

Die Erfindung wird nachfolgend anhand eines in der Zeichnung schematisch dargestellten Ausführungsbeispieles näher erläutert. In der Zeichnung ist mit 1 ein Drehrohrofen für die Klinkerherstellung bezeichnet. Das gebrannte Material gelangt mit Schmelzphasen (Ferrite, Aluminate) in einen nachgeschalteten kurzbauenden Klinkerkühler 2, welcher mit Kühlluft betrieben wird, welche über ein Gebläse 3 und eine Leitung 4 in den Klinkerkühler 2 eingebracht wird. Die Klinkerkühlerabluft wird über die Leitung 5 bei Temperaturen zwischen 1000 und 1200° C den Brennern 6 des Drehrohrofens 1 rückgeführt.

Der weitestgehend erstarrte Heißklinker gelangt bei Temperaturen von unter 900° C in einen Aufgabebunker 7 und wird über eine Druckschleuse 8 in ein Rohr 9 verbracht. An das Rohr sind Hochdruckwasserdüsen 10 angeschlossen. Über eine Pumpe 11 wird Hochdruckwasser mit einem Druck von < 200 bar bei Temperaturen eingestoßen. Als Hochdruckwasser wird bevorzugt unmittelbar Kondensat, welches bei Temperaturen von etwa 90 bis 95° C zur Verfügung steht, eingesetzt. Die Heißklinkerpartikel werden hiebei mit dem Hochdruckwasserstrahl beaufschlagt, wobei sich Dampf mit einem maximalen Druck von etwa 10 bar ausbildet, welcher zur Beschleunigung der Teilchen in Richtung des Pfeiles 12 wirksam wird und gleichzeitig aufgrund der hohen Temperaturunterschiede zu einer raschen Desintegration der heißen Klinkerpartikel führt. Im Inneren des Rohres 9 sind nun radial einwärts und in axialer Richtung auf Lücke angeordnete Vorsprünge 13 ersichtlich, welche eine mehrfache Umlenkung des Strahles erzwingen und zur Umsetzung der kinetischen Energie in Zerkleinerungsarbeit wirksam werden. Der das Rohr 9 verlassende Strahl expandiert rasch auf atmosphärischen Druck oder geringen Überdruck und kann beispielsweise gegen eine Prallplatte 14 gerichtet werden, wodurch eine weitere Zerkleinerung der Teilchen erfolgt. Bei der Darstellung in der Zeichnung wird der Strahl nun in eine Wirbelschicht 15 im Inneren eines Wirbelschichtreaktors 16 gerichtet, wobei die Temperatur dieser Wirbelschicht durch zusätzliche Aufgabe von Heißklinker über eine Schleuse 17 auf einem Temperaturniveau gehalten wird, welches sicherstellt, daß bei dem Druckniveau in der Wirbelschicht von etwa 1,5 bar Überdruck eine Kondensation des überhitzten Dampfes mit einer Temperatur von ca. 150° C mit Sicherheit vermieden wird. Die zerkleinerten Teilchen werden über einen Sichter 18 abgezogen und gelangen in einen Filter 19, aus welchem das Feingut über eine Schleuse 20 ausgebracht werden kann. Der überhitzte Dampf wird über die Leitung 21 abgezogen.

## Patentansprüche

1. Verfahren zum Zerkleinern von Klinker aus einer einem Klinkerofen nachgeschalteten Klinkerkühlanlage, dadurch gekennzeichnet, daß der Klinker im Anschluß an den Klinkerofen auf Temperaturen von 500 bis 900° C mit Luft gekühlt und verfestigt wird, daß die Kühlluft bei Temperaturen von über 800° C dem Klinkerofen als Verbrennungsluft rückgeführt wird, daß die heißen Klinkerteilchen mit Hochdruckwasser unter einem Druck von über 10 bar beaufschlagt und beschleunigt werden und in der Folge gegen eine Prallplatte oder weitere Klinkerteilchen gerichtet gefördert werden und daß überhitzter Dampf bei atmosphärischem Druck und Temperaturen über 110° C, vorzugsweise 110 bis 150° C, abgezogen wird.

2. Verfahren nach Anspruch 1, dadurch gekennzeichnet, daß die Kühlluftmenge für den Klinkerkühler der im Klinkerofen benötigten Verbrennungsluftmenge entsprechend gewählt wird.

3. Verfahren nach Anspruch 1 oder 2, dadurch gekennzeichnet, daß Hochdruckwasser mit einem Druck zwischen 10 und 200 bar eingesetzt wird.

4. Verfahren nach Anspruch 1, 2 oder 3, dadurch gekennzeichnet, daß ein aus zerkleinertem Klinker und überhitztem Wasserdampf gebildeter Strahl in eine Wirbelschicht mit heißem Klinker gerichtet wird.

5. Vorrichtung zur Durchführung des Verfahrens nach einem der Ansprüche 1 bis 4 mit einem Klinkerofen (1) und einem Klinkerkühler (2), dadurch gekennzeichnet, daß an den Klinkerkühler (2) eine Druckschleuse (8) angeschlossen ist, über welche heißer Klinker in ein Rohr (9) eingebracht wird, daß an das Rohr an einem Ende eine Druckwasserleitung angeschlossen ist und daß am anderen Ende des Rohres eine Austrittsöffnung für den Klinker und den gebildeten überhitzten Wasserdampf angeordnet ist.

6. Vorrichtung nach Anspruch 5, dadurch gekennzeichnet, daß im Inneren des Rohres (9) radial einwärts gerichtete Vorsprünge (13) angeordnet sind.

7. Vorrichtung nach Anspruch 6, dadurch gekennzeichnet, daß die radial einwärts gerichteten Vorsprünge (13) sich über einen Teil des Innenumfangs des Rohres (9) erstrecken und in Achsrichtung des Rohres versetzt und auf Lücke angeordnet sind.

8. Vorrichtung nach einem der Ansprüche 5 bis 7, dadurch gekennzeichnet, daß das Austrittsende des Rohres (9) an einen Wirbelschichtreaktor (16) angeschlossen ist, an welchem eine Aufgabe (17) für heißen Klinker angeschlossen ist.

9. Vorrichtung nach einem der Ansprüche 5 bis 8, dadurch gekennzeichnet, daß der Wirbelschichtreaktor (16) eine Auspanzerung (14) trägt, welche von der Achse der angeschlossenen Rohres durchsetzt wird.

10. Vorrichtung nach einem der Ansprüche 5 bis 9, dadurch gekennzeichnet, daß an den Wirbelschichtreaktor (16) ein Sichter (18) zum Austrag des zerkleinerten Klinkers angeschlossen ist.

11. Vorrichtung nach einem der Ansprüche 5 bis 10, dadurch gekennzeichnet, daß eine Dosiereinrichtung für die Zugabe von heißem Klinker in den Wirbelschichtreaktor (16) vorgesehen ist.

12. Vorrichtung nach einem der Ansprüche 5 bis 11, dadurch gekennzeichnet, daß der Klinkerkühler (2) über eine Abluftleitung (5) mit Brennern (6) des Klinkerofens (1) verbunden ist.
